# EUROPEAN PATENT APPLICATION

(11) **EP 4 585 420 A1**
(43) Date of publication of application: **16.07.2025**
(21) Application number: 25151034.3
(22) Date of filing: 09.01.2025
(51) Int. Cl.: B33Y 80/00, F28F 19/01, F28F 17/00, F28D 21/00

(54) **INTEGRAL ADDITIVELY MANUFACTURED FLUID REMOVAL GEOMETRY**

(30) Priority: 12.01.2024 US 202418412051
(71) Applicant: Hamilton Sundstrand Space Systems International, Inc., Charlotte, NC 28217-4578 (US)
(72) Inventor: RUIZ, Gabriel, Southwick, MA, 01077 (US); MIRANDA, Joseph, Suffield, CT, 06078 (US)
(74) Representative: Dehns

(57) **Abstract**

A heat exchanger is provided and includes a heat exchanger core (220) and an integral slurper circuit. The integral slurper circuit includes multiple slurper bars (210) integrally formed with the heat exchanger core (220) as a single, monolithic body. Each of the multiple slurper bars (210) includes a hollow shell (211). The hollow shell (211) is elongate in a longitudinal dimension thereof, which is aligned with a direction of flow of humid air exiting the heat exchanger core (220). The hollow shell (211) is formed to define an interior (212) and to define holes (213) arranged along a length of the hollow shell (211) by which water that is condensed out of the humid air is drawn into the interior (212).

## Description

### BACKGROUND

Exemplary embodiments of the present disclosure relate generally to heat exchange systems and, in some embodiments, to space system heat exchangers with an integral additively manufactured fluid removal geometry.

Space system heat exchangers utilize humid air as a heat transfer fluid. This humid air is to be circulated around living quarters for the crew and so the humidity needs to be drawn out. To do so, the heat exchangers can implement a slurper circuit. The slurper circuit is configured to separate the water out of the humid air for crew comfort.

A continuing need exists for improvements in the slurper circuit.

### BRIEF DESCRIPTION

According to an aspect of the disclosure, a heat exchanger is provided and includes a heat exchanger core and an integral slurper circuit. The integral slurper circuit includes multiple slurper bars integrally formed with the heat exchanger core as a single, monolithic body. Each of the multiple slurper bars includes a hollow shell. The hollow shell is elongate in a longitudinal dimension thereof, which is aligned with a direction of flow of humid air exiting the heat exchanger core. The hollow shell is formed to define an interior and to define holes arranged along a length of the hollow shell by which water that is condensed out of the humid air is drawn into the interior.

In accordance with additional or alternative embodiments, the multiple slurper bars are arranged in parallel with one another.

In accordance with additional or alternative embodiments, the multiple slurper bars all have a common configuration.

In accordance with additional or alternative embodiments, the hollow shell of each of the multiple slurper bars includes parallel ridges extending perpendicularly with respect to the longitudinal dimension.

In accordance with additional or alternative embodiments, the hollow shell of each of the multiple slurper bars includes offset angled ridges extending diagonally with respect to the longitudinal dimension.

In accordance with additional or alternative embodiments, the hollow shell of each of the multiple slurper bars includes parallel ridges and channels extending perpendicularly with respect to the longitudinal dimension and ridged baffles extending in parallel with respect to the longitudinal dimension.

According to an aspect of the disclosure, a method of additively manufacturing an integral slurper is provided. The method includes building up a heat exchanger core and building up multiple slurper bars such that the multiple slurper bars are integrally formed with the heat exchanger core as a single, monolithic body. The building up of each of the multiple slurper bars includes forming a hollow shell, which is elongate in a longitudinal dimension thereof, and which is aligned with a direction of flow of humid air that exits the heat exchanger core and forming the hollow shell such that the hollow shell defines an interior and such that the hollow shell defines holes arranged along a length of the hollow shell by which water that condenses out of the humid air is drawn into the interior.

In accordance with additional or alternative embodiments, the building up of each of the multiple slurper bars includes executing at least one of computational fluid dynamics (CFD) and finite element analysis (FEA) for design optimization.

In accordance with additional or alternative embodiments, there is an absence of post-processing operations following completion of the building up of the heat exchanger core and the building up of the multiple slurper bars.

In accordance with additional or alternative embodiments, the building up of the multiple slurper bars includes arranging the multiple slurper bars in parallel with one another.

In accordance with additional or alternative embodiments, the building up of the multiple slurper bars includes forming each hollow shell to have a common configuration.

In accordance with additional or alternative embodiments, the forming of the hollow shell of each of the multiple slurper bars is executed such that the hollow shell includes parallel ridges extending perpendicularly with respect to the longitudinal dimension.

In accordance with additional or alternative embodiments, the forming of the hollow shell of each of the multiple slurper bars is executed such that the hollow shell includes offset angled ridges extending diagonally with respect to the longitudinal dimension.

In accordance with additional or alternative embodiments, the forming of the hollow shell of each of the multiple slurper bars is executed such that the hollow shell includes parallel ridges and channels extending perpendicularly with respect to the longitudinal dimension and ridged baffles extending in parallel with respect to the longitudinal dimension.

According to an aspect of the disclosure, a slurper circuit is provided and includes a duct, a first module through which the duct passes and including an integral slurper that removes water from humid air flowing along the duct and a second module. The second module is receptive of air and the water from the first module and outputs the water and returns the air to the duct. The integral slurper includes a heat exchanger core and multiple slurper bars integrally formed with the heat exchanger core as a single, monolithic body. Each of the multiple slurper bars includes a hollow shell elongate in a longitudinal dimension thereof, which is aligned with a direction of flow of the humid air along the duct, and defining an interior and holes arranged along a length of the hollow shell by which water that is condensed out of the humid air is drawn into the interior for being directed toward the second module.

In accordance with additional or alternative embodiments, the first module is a heat exchanger module and includes a bypass line that bypasses the integral slurper.

In accordance with additional or alternative embodiments, the second module is a water separator module and includes a vacuum motor that generates a negative pressure for drawing the water through the holes and into the interior of the hollow shell of each of the multiple slurper bars.

In accordance with additional or alternative embodiments, the multiple slurper bars are arranged in parallel with one another.

In accordance with additional or alternative embodiments, the multiple slurper bars all have a common configuration.

In accordance with additional or alternative embodiments, the hollow shell of each of the multiple slurper bars includes at least one or more of parallel ridges extending perpendicularly with respect to the longitudinal dimension, offset angled ridges extending diagonally with respect to the longitudinal dimension and parallel ridges and channels extending perpendicularly with respect to the longitudinal dimension and ridged baffles extending in parallel with respect to the longitudinal dimension.

These and other advantages and features will become more apparent from the following description taken in conjunction with the drawings.

### BRIEF DESCRIPTION OF THE DRAWINGS

The following descriptions should not be considered limiting in any way. With reference to the accompanying drawings, like elements are numbered alike:
FIG. 1 is a schematic diagram illustrating a slurper circuit in accordance with embodiments;
FIG. 2 is a perspective view of an integral slurper of the slurper circuit of FIG. 1 in accordance with embodiments;
FIG. 3 is a side and perspective view of a configuration of a slurper bar of the integral slurper of FIG. 2 in accordance with embodiments;
FIG. 4 is a side and perspective view of a configuration of a slurper bar of the integral slurper of FIG. 2 in accordance with embodiments;
FIG. 5 is a side and perspective view of a configuration of a slurper bar of the integral slurper of FIG. 2 in accordance with embodiments; and
FIG. 6 is a flow diagram illustrating a method of additively manufacturing an integral slurper in accordance with embodiments.

These and other advantages and features will become more apparent from the following description taken in conjunction with the drawings.

### DETAILED DESCRIPTION

A detailed description of one or more embodiments of the disclosed apparatus and method are presented herein by way of exemplification and not limitation with reference to the Figures.

Legacy slurper circuit designs are often implemented such that a slurper geometry is provided as separate assembly that includes multiple components. These multiple components are brazed together and then welded on a heat exchanger core. This manufacturing method is time consuming, expensive and limiting in design freedoms leading to non-optimized performance.

Thus, as will be described below, an integral slurper geometry is provided with a single, monolithic design. Each slurper circuit geometry can be optimized via computational fluid dynamics (CFD) and finite element analysis (FEA) and manufactured using additive manufacturing (AM) processes, such as laser powder bed fusion (L-PBF) or other suitable AM processes, to obtain a desired geometry that would be impossible to manufacture via traditional methods. Most post-processing machining steps can be omitted due to the inherent integral design definition. Manufacturing the slurper circuit reduces lead time costs, manufacturing post-processing, reduces part counts and improves performance.

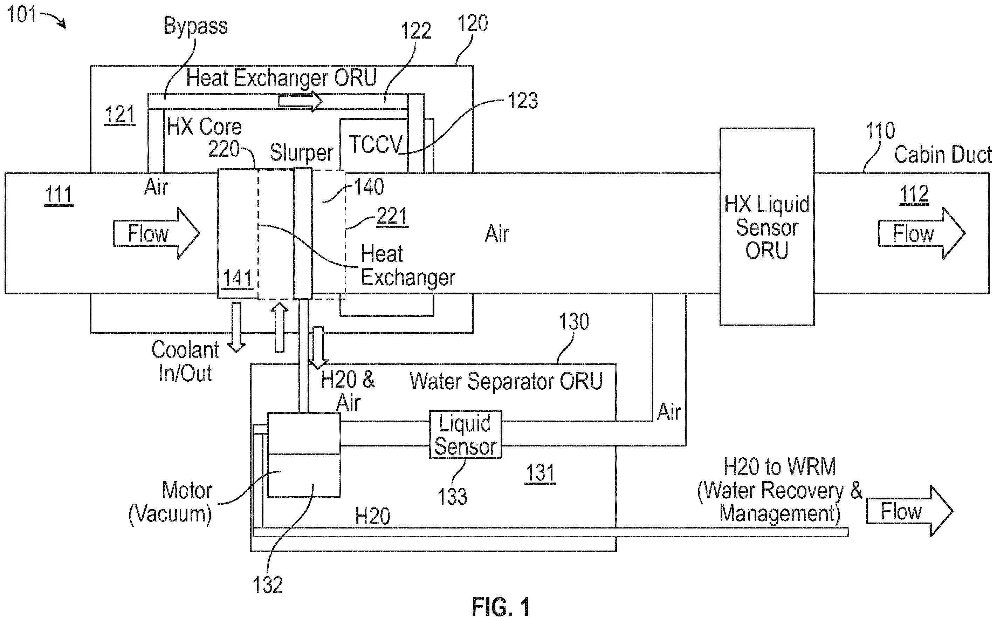

With reference to FIG. 1, a common cabin air assembly (CCAA) 101 is provided for use in various living quarters such as those found in spacecraft and the international space station (ISS). The CCAA 101 includes a cabin duct 110 having an inlet section 111, into which humid air flows, and an outlet section 112. The CCAA 101 further includes a first module 120 and a second module 130. The cabin duct 110 passes through the first module 120. The first module 120 includes an integral slurper 140, which is provided as part of a heat exchanger 141 along with a heat exchanger core 220 (to be described below). The integral slurper 140 removes water from the humid air flowing along the cabin duct 110 from the inlet section 111 to the outlet section 112. The second module 130 is receptive of small quantities of air and the water that is removed from the humid air from the first module 120. The second module 130 is configured to output the water toward a water recovery and management system (WRM) and to return the air to the cabin duct 110.

The first module 120 can be provided as a heat exchanger module 121 and can include a bypass line 122 that bypasses the heat exchanger 141 with the integral slurper 140 and a temperature control and check valve (TCCV) 123 at an end of the bypass line 122. The second module 130 can be provided as a water separator module 131 and can include a vacuum motor 132 and a liquid sensor 133. The vacuum motor 132 generates a negative pressure for removing the water from the humid air flowing along the cabin duct 110 (as will be discussed further below) and for outputting the water toward the water recovery and management system (WRM) and for returning the air to the cabin duct 110 via the liquid sensor 133.

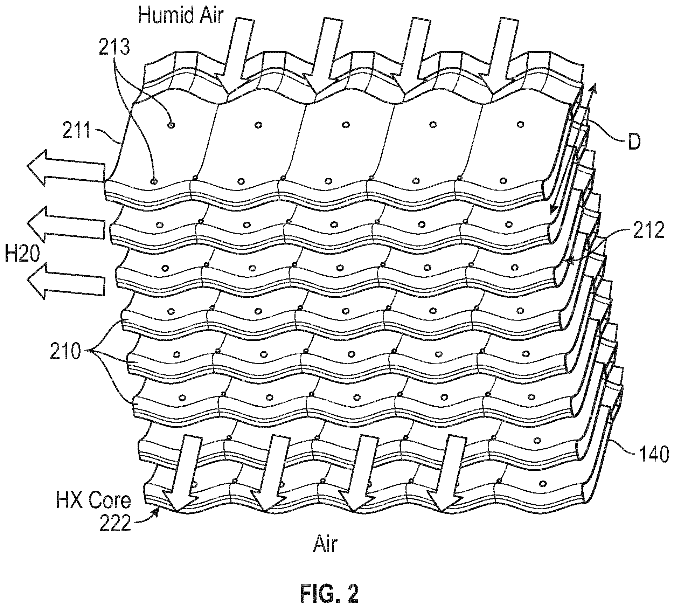

With continued reference to FIG. 1 and with additional reference to FIGS. 2-5, the heat exchanger 141 (see FIG. 1) includes the integral slurper 140 and a heat exchanger core 220 and the integral slurper 140 includes multiple slurper bars 210. The multiple slurper bars 210 (see FIGS. 1 and 2) are integrally formed with the heat exchanger core 220 as a single, monolithic body 221 (see FIG. 1) through AM processes. The AM processes allow for the multiple slurper bars 210 to have configurations and features that would be difficult or impossible to achieve with other manufacturing processes (i.e., machining, forging, casting, etc.).

As shown in FIG. 2, each of the multiple slurper bars 210 includes a hollow shell 211. For each of the multiple slurper bars 210, the hollow shell 211 is elongate in a longitudinal dimension D thereof. The longitudinal dimension D is aligned (i.e., is parallel) with a direction of flow of the humid air along the cabin duct 110. In addition, for each of the multiple slurper bars 210, the hollow shell 211 is formed to define an interior 212 and holes 213. The holes 213 are arranged along a length of the hollow shell 211. Water that is condensed out of the humid air flowing along the cabin duct 110 by the heat exchanger core 220 (see FIG. 1) is drawn through the holes 213 and into the interior 212 by the negative pressure generated by the vacuum motor 132 (see FIG. 1). This water is then directed toward the second module 130 along with air as described above.

In accordance with embodiments, the multiple slurper bars 210 can be arranged in parallel with one another and in some cases, as shown in FIG. 2, can be arranged in a lattice 222. In these or other cases, the multiple slurper bars 210 can all have a common or nearly common configuration. The common or nearly common configuration can be arrived at or determined by various processes including, but not limited to, optimization via at least one of CFD and FEA and manufacturing using AM processes.

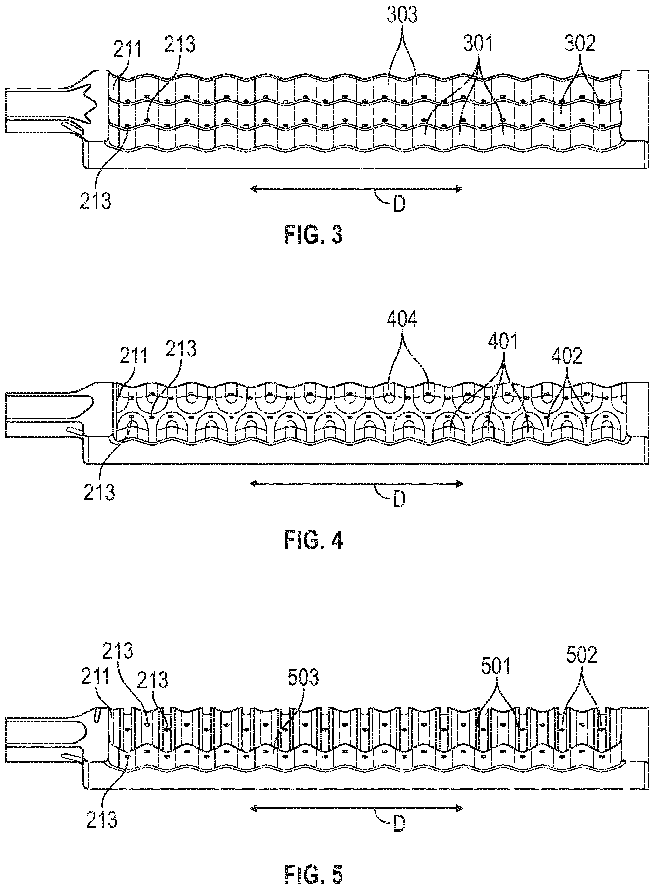

For example, as shown in FIG. 3, the hollow shell 211 of each of the multiple slurper bars 210 can include parallel ridges 301 that extend perpendicularly with respect to the longitudinal dimension D where the holes 213 can be provided on the front and/or rear sides of peaks 303 of the parallel ridges 301 as well as in the troughs 302 between the parallel ridges 301. As another example, as shown in FIG. 4, the hollow shell 211 of each of the multiple slurper bars 210 can include parallel angled or offset ridges 401 that extend transversely or diagonally with respect to the longitudinal dimension D where the holes 213 can be provided on the front and/or rear sides of peaks 404 of the parallel or offset angled ridges 401 as well as in the troughs 402 between the parallel angled ridges 401. As yet another example, as shown in FIG. 5, the hollow shell 211 of each of the multiple slurper bars 210 can include parallel ridges 501 and channels 502 extending perpendicularly with respect to the longitudinal dimension D and ridged baffles 503 extending in parallel with respect to the longitudinal dimension D where the holes 213 can be provided on the front and/or rear sides of the parallel ridges 501 and channels 502 on the front and/or rear sides of the ridges of the ridged baffles 503.

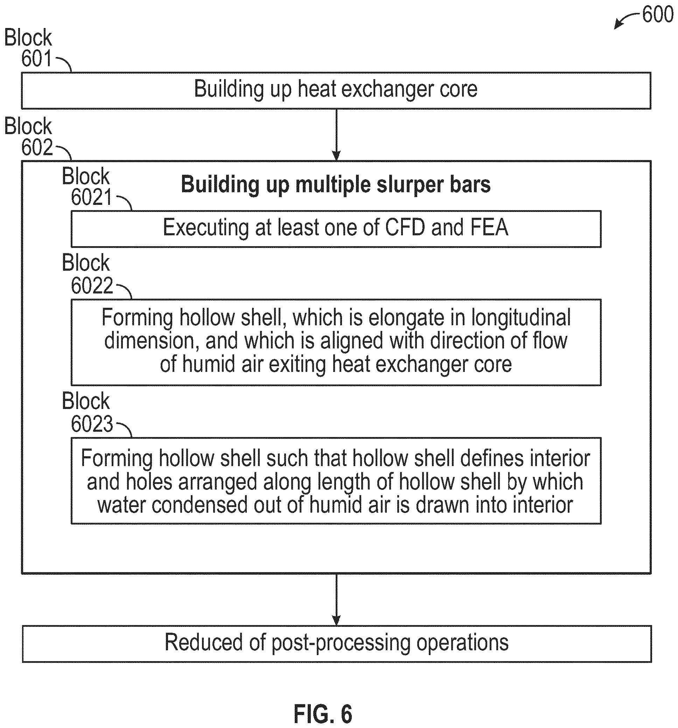

With reference to FIG. 6, a method 600 of additively manufacturing an integral slurper, such as the integral slurper 140 of FIG. 1, is provided. As shown in FIG. 6, the method 600 includes building up of a physical form of a heat exchanger core (block 610) and building up multiple slurper bars (block 620) such that the multiple slurper bars are integrally formed with the heat exchanger core as a single, monolithic body (i.e., the single, monolithic body 221 of FIG. 2). The building up of each of the multiple slurper bars of block 620 can include executing at least one of CFD and FEA for design optimization (block 621) and can further include forming a hollow shell, which is elongate in a longitudinal dimension thereof, and which is aligned with a direction of flow of humid air that exits the heat exchanger core (block 622) generally as described above and forming the hollow shell such that the hollow shell defines an interior and holes arranged along a length of the hollow shell by which water that condenses out of the humid air is drawn into the interior (block 623) generally as described above. In any case, there is an absence of post-processing operations that would be required for brazed/welded configurations following completion of the building up of the heat exchanger core of block 610 and the building up of the multiple slurper bars of block 620.

Technical effects and benefits of the features described herein are the provision of a design that incorporates a legacy multi-piece construction into a single monolithic design. Each slurper circuit geometry can be optimized via CFD and FEA to obtain the desired geometry that would be impossible or cost-prohibitive to manufacture via traditional methods. Most post-processing machining steps can be omitted due to the inherent integral design definition. Manufacturing the integral slurper circuit reduces lead time costs, manufacturing post-processing, reduces part counts and improves performance.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A heat exchanger, comprising:
a heat exchanger core (220); and
an integral slurper circuit, comprising:
multiple slurper bars (210) integrally formed with the heat exchanger core (220) as a single, monolithic body,
each of the multiple slurper bars (210) comprising a hollow shell (211),
the hollow shell (211) being elongate in a longitudinal dimension thereof, which is aligned with a direction of flow of humid air exiting the heat exchanger core (220), and
the hollow shell (211) being formed to define an interior (212) and to define holes (213) arranged along a length of the hollow shell (211) by which water that is condensed out of the humid air is drawn into the interior (212).

2. The heat exchanger according to claim 1, wherein the multiple slurper bars (210) are arranged in parallel with one another.

3. The heat exchanger according to claim 1 or 2, wherein the multiple slurper bars (210) all have a common configuration.

4. The heat exchanger according to any preceding claim, wherein the hollow shell (211) of each of the multiple slurper bars (210) comprises parallel ridges extending perpendicularly with respect to the longitudinal dimension; and/or
wherein the hollow shell (211) of each of the multiple slurper bars (210) comprises offset angled ridges extending diagonally with respect to the longitudinal dimension; and/or
wherein the hollow shell (211) of each of the multiple slurper bars (210) comprises parallel ridges and channels extending perpendicularly with respect to the longitudinal dimension and ridged baffles extending in parallel with respect to the longitudinal dimension.

5. A method of additively manufacturing a heat exchanger, the method comprising:
building up a heat exchanger core (220); and
building up multiple slurper bars (210) such that the multiple slurper bars (210) are integrally formed with the heat exchanger core (220) as a single, monolithic body,
the building up of each of the multiple slurper bars (210) comprising:
forming a hollow shell (211), which is elongate in a longitudinal dimension thereof, and which is aligned with a direction of flow of humid air that exits the heat exchanger core (220); and
forming the hollow shell (211) such that the hollow shell (211) defines an interior (212) and such that the hollow shell (211) defines holes (213) arranged along a length of the hollow shell (211) by which water that condenses out of the humid air is drawn into the interior (212).

6. The method according to claim 5, wherein the building up of each of the multiple slurper bars (210) comprises executing at least one of computational fluid dynamics (CFD) and finite element analysis (FEA) for design optimization.

7. The method according to claim 5 or 6, wherein there is an absence of post-processing operations following completion of the building up of the heat exchanger core (220) and the building up of the multiple slurper bars (210).

8. The method according to any of claims 5-7, wherein the building up of the multiple slurper bars (210) comprises arranging the multiple slurper bars (210) in parallel with one another.

9. The method according to any of claims 5-8, wherein the building up of the multiple slurper bars (210) comprises forming each hollow shell (211) to have a common configuration.

10. The method according to any of claims 5-9, wherein the forming of the hollow shell (211) of each of the multiple slurper bars (210) is executed such that the hollow shell (211) comprises parallel ridges extending perpendicularly with respect to the longitudinal dimension; and/or
wherein the forming of the hollow shell (211) of each of the multiple slurper bars (210) is executed such that the hollow shell (211) comprises offset angled ridges extending diagonally with respect to the longitudinal dimension; and/or
wherein the forming of the hollow shell (211) of each of the multiple slurper bars (210) is executed such that the hollow shell (211) comprises parallel ridges and channels extending perpendicularly with respect to the longitudinal dimension and ridged baffles extending in parallel with respect to the longitudinal dimension.

11. A slurper circuit, comprising:
a duct (110);
a first module (120) through which the duct passes and comprising a heat exchanger core (220) and an integral slurper (140) that removes water from humid air flowing along the duct (110); and
a second module (130), which is receptive of air and the water from the first module (120), and which outputs the water and returns the air to the duct,
the integral slurper (140) comprising multiple slurper bars (210) integrally formed with the heat exchanger core (220) as a single, monolithic body,
each of the multiple slurper bars (210) comprising a hollow shell (211) elongate in a longitudinal dimension thereof, which is aligned with a direction of flow of the humid air along the duct, and defining an interior (212) and holes (213) arranged along a length of the hollow shell (211) by which water that is condensed out of the humid air is drawn into the interior (212) for being directed toward the second module.

12. The slurper circuit according to claim 11, wherein the first module is a heat exchanger module and comprises a bypass line that bypasses the integral slurper.

13. The slurper circuit according to claim 11 or 12, wherein the second module is a water separator module and comprises a vacuum motor that generates a negative pressure for drawing the water through the holes (213) and into the interior (212) of the hollow shell (211) of each of the multiple slurper bars (210).

14. The slurper circuit according to any of claims 11-13, wherein the multiple slurper bars (210) are arranged in parallel with one another; and/or wherein the multiple slurper bars (210) all have a common configuration.

15. The slurper circuit according to any of claims 11-14, wherein the hollow shell (211) of each of the multiple slurper bars (210) comprises at least one or more of:
parallel ridges extending perpendicularly with respect to the longitudinal dimension;
offset angled ridges extending diagonally with respect to the longitudinal dimension; and
parallel ridges and channels extending perpendicularly with respect to the longitudinal dimension and ridged baffles extending in parallel with respect to the longitudinal dimension.
